# EUROPÄISCHE PATENTSCHRIFT

(11) **EP 0 974 263 B1**
(45) Veröffentlichungstag und Bekanntmachung des Hinweises auf die Patenterteilung: **15.01.2003**
(21) Anmeldenummer: 99109068.9
(22) Anmeldetag: 07.05.1999
(51) Int. Cl.: A01G 9/02, B29C 51/34, B29C 51/30

(54) **Kunststoff-Pflanztopf sowie Tiefzieh-Form und -Verfahren zu seiner Herstellung**
Plastic pot, deep drawing mould and process for producing the same
Pot en plastique, moule d'emboutissage et procédé pour sa fabrication

(30) Priorität: 15.07.1998 DE 29812475 U
(43) Veröffentlichungstag der Anmeldung: 26.01.2000
(73) Patentinhaber: Gebr. Pöppelmann, Kunststoffwerk-Werkzeugbau, 49393 Lohne (DE)
(72) Erfinder: Sieverding, Alfons, 49393 Lohne-Brockdorf (DE)
(74) Vertreter: Busse & Busse Patentanwälte

(56) Entgegenhaltungen:
- WO-A-97/07034
- DE-U- 9 308 219
- FR-A- 1 452 337
- FR-A- 2 195 514
- US-A- 5 351 852

## Beschreibung

Pflanztöpfe für Blumen und sonstige Pflanzen werden großenteils aus Kunststoff gefertigt. Für die Anzucht, den Transport und Vertrieb in Erwerbsgartenbau und dem Handel gilt dies fast generell. Insbesondere im gewerblichen Bereich sind trotz des Drucks auf Material-und Arbeitskosten rigorose Anforderungen die Festigkeit, Zuverlässigkeit, Stapelbarkeit und sonstige Raumnutzung zu erfüllen. Dies gilt für Einzel-Pflanztöpfe mit rundem oder rechteckigem bzw. quadratischen Querschnitt wie auch für Mehrfach-Pflanztöpfe (Steigen).

Dementsprechend gibt es bereits hochentwickelte, dünnwandige Pflanztöpfe, die im Spritzgußverfahren hergestellt sind, wobei das Spritzgußverfahren relativ freie und detaillierte Gestaltungen in kritischen Bereichen, insbesondere im Bodenbereich erlaubt, wo Überwässerung und Staunässe durch sorgfältig ausgearbeitete Bodenprofilierungen, Ablauflöcher, Tropf- bzw. Abrinnkanten und Aufstellfüße berücksichtigt werden. Ein Beispiel für diese Entwicklung ist insbesondere in der Gebrauchsmusterschrift 93 08 335 zu sehen.

Pflanztöpfe in einer aus Kunststoffolie tiefgezogenen Form lassen sich mit hochentwickeltem Stand von Formbau und Formungstechnik zu allgemeiner Forderungen wie Materialersparnis, Gewicht, Preis, Festigkeit und allgemeiner Handhabbarkeit noch günstiger darstellen, zeigen aber in kritischen Bereichen wie der Entwässerung und der Vermeidung von Staunässe Unzulänglichkeiten. Dies ergibt sich letztlich aus der rigorosen Randbedingung, daß ein solcher Topf aus einer flachen Folie durch Tiefziehen herstellbar sein soll unddaß dabei Stege, Zwischenwände, Stiftvortsätze und dgl. systemwidrig erscheinen: die tiefgezogene Form ist grundsätzlich zunächst einmal eine Topfform.

Bisher wurde den Erfordernissen der Entwässerung mit kleinen napfförmig aus dem Boden nach unten gezogenen Füßen Rechnung getragen, die unter dem Boden eines Pflanztopfs immerhin einen Zwischenraum für ein Ablaufen von Wasser ermöglichen, welches durch Löcher im Boden des Topfes austritt. Dabei sind allerdings schon im Bereich dieser napfförmigen Füße kleine, nicht entwässerbare Bereiche hinzunehmen. Bedeutsamer aber ist, daß im Erwerbsgartenbau nicht vorausgesetzt werden kann, daß die Pflanztöpfe auf vollständig entwässerten, ebenen, schrägen und sauberen Ausstellflächen stehen, sondern durchaus auch in flachen Pfützen. Daneben besteht die Gefahr, daß unter Kapillarwirkung erhebliches Wasser zwischen Pflanztopf-Boden und Aufstellfläche verbleibt, welches durch die Löcher im Topfboden zurückwirkt und zu einer Überwässerung führt.

Aus der FR-A-1452337 ist ein Pflanztopf zu ersehen, der auch aus einer Kunststofffolie im Tiefziehverfahren herstellt sein kann und einen angehobenen Bodenbereich aufweist, der mit einem wellenförmig nach unten vorstehenden Rand in eine (konische) Umfangswandung des Pflanztopfs übergeht. Der Boden weist Belüftungslöcher auf und der Rand weist an seiner Aufstellkante hochgezogene Durchlässe auf, die grundsätzlich auch eine Ent- und Bewässerung ermöglichen. Allerdings bildet der Aufstellrand innen eine ringförmige, nicht entwässerbare Mulde mit der Gefahr von Feuchtigkeitsnestern und Staunässe.

Zur Herstellung von Bechern wie etwa Joghurtechern ist es aus der FR-A-2195514 bekannt, einen hochgelegten Boden des konischen Bechers durch ein Einstülpen der stumpfkegeligen tiefgezogenen Form von unten zu schaffen, wobei allerdings von der konischen Ausgangsform her innenseitig am Rand eine Ringmulde entsteht, die in einem Pflanztopf mit Entwässerungslöchern im hochgelegten Boden ohne Entwässerung bleiben würden. Darüber hinaus schafft die elementare Formgebung keine Durchlaßöffnungen im Aufstellrand zwischen dem Unter-Boden-Bereich und dem Außenbereich.

Aufgabe der Erfindung ist es dementsprechend, einen im Tiefziehverfahren herstellbaren Pflanztopf zu schaffen, der ohne unangemessenen Aufwand eine sichere Entwässerung bei guter Qualität des Topfes hinsichtlich seiner Steifigkeit und Aufstellsicherheit bietet. Aufgabe der Erfindung ist es weiterhin, hierfür eine geeignete Tiefziehform und ein entsprechendes Tiefziehverfahren zu gestalten.

Ein im Tiefziehverfahren hergestellter Pflanztopf gemäß dem Anspruch 1 schafft mit der Ausbildung doppellagiger Randabschnitte hinreichend hoch ausbildbare Füße, die es zu gewährleisten erlauben, daß bei einer Schwall- oder Brausebewässerung überschüssig anfallendes Wasser aus dem Topf durch Löcher im Boden nach unten sinkt, ohne an Zwischenboden und Aufstellfläche anzuhaften. Der doppellagig ausgebildete Rand ergibt eine Steifigkeit, die den Belastungen der Füße mit der Befüllung und gegebenenfalls mit Auswirkungen von außen bei der Handhabung gerecht werden kann, so daß diese Füße nicht etwa folienartig geknickt und gebogen werden. Überdies sind sie als Randabschnitte im Sinne großer Aufstellsicherheit nach außen verlegt.

Dabei würde allerdings ein durchgängig umlaufender, doppellagig ausgebildeter Rand dem Entwässerungserfordernis zuwiderlaufen, indem er bei Aufstellung auf eine hinreichend glatte oder auch elastische Oberfläche einen abgedichteten und abgeschlossenen Stauraum bilden würde. Dem ist dadurch abgeholfen worden, daß der Rand abschnittsweise mit zumindest einer Lücke mit gegenüber der Aufstellfläche angehobener Unterkante ausgebildet ist. Es ist also zumindest eine seitliche Ablaufpforte vorzusehen, um Wasser nicht einzuschließen. Es versteht sich, daß schon aus ästhetischen oder insbesondere aus praktischen Gesichtspunkten, um dem Wasser auf einer schrägen Aufstellfläche einen Ablauf nach unten zu ermöglichen, mehrere Lücken dieser Art gleichmäßig verteilt vorgesehen werden können. Diese Lücken können bei oder nach Ausbildung des doppellagigen Randes bei der Formgebung gebildet werden, indem der Rand gestaucht oder etwa nach innen im Bereich der Lücke oder Lücken ausgebogen wird. Bevorzugt wird aber eine Ausführung, bei der die Lücken bereits mit der einstülpenden Formgebung des doppellagigen Randes sofort entstehen, nachdem die zuvor gebildete Zwischenform des Topfes bereits unterschiedliche Höhen im Randbereich erhalten hat.

Dabei werden die Lücken vorzugsweise nicht über die volle Höhe der Randabschnitte ausgebildet, da dies die Formgebung erschwert und für den Wasserablauf auch nicht erforderlich ist und da die auch im Bereich der Lücken noch verbleibenden Randabschnitte dazu dienen, einen ringsum durchlaufenden "Bodenrahmen" mit Vorteil für die Eigensteifigkeit und Standfestigkeit des Topfes zu bilden.

Die zur Ausbildung der Randabschnitte und gegebenenfalls auch im Bereich der Lücken doppellagig gestaltete Folie wird zweckmäßig direkt aneinanderliegend geformt, damit von der Innenseite des Topfes keine Rinnen oder Sacklöcher entstehen, in denen sich Wasser, Erde oder Wurzelwerk festsetzen kann.

Eine Tiefziehform zur Bildung derartiger Pflanztöpfe gemäß Anspruch 7 mit einer Formmulde, die im wesentlichen durch eine Mantelform und eine Bodenform für die Formung des Topfes im Mantel- und Bodenbereich ausgestattet ist, erhält eine (nach innen in die Mulde bewegliche) Bodenform, der einen Randbereich freiläßt, um mit der Bewegung der Bodenform nach innen ein Einstülpen des Formlings und dabei die Ausbildung eines doppellagigen Randes zu erhalten. Bereits herkömmlich waren Tiefziehformen für Pflanztöpfe mit nach innen beweglichen Bodenformen versehen, um den Formling nach der Formgebung auszuwerfen. Bei diesem Auswerfen kam es natürlich in erster Linie darauf an, einen Auswerfdruck auf den Randbereich des Formlings auszuüben. Dieser Randbereich wird bei der vorliegenden Einstülp-Formung im vorliegenden Prozeß ausgenommen. Der Randbereich kann zwar auch beweglich ausgebildet sein, um nachfolgend aus Auswerfer zu fungieren, ist aber vor und bei dem Einstülpvorgang Teil der (festen) Anfangsform mit einer Randprofilierung, die dafür sorgt, daß das Einstülpen nicht zu einer ebenen umlaufenden Unterkante, sondern zu unterschiedlichen Höhen führt.

Zweckmäßig ist der Formmulde eingangsseitig ein Niederhalter zugeordnet, der die zu verformende erwärmte Ausgangsfolie randseitig fixiert und beim Tiefziehen hält und der auch beim gegengerichteten Stülpvorgang als Widerlager dient.

Das erfindungsgemäße Verfahren nach dem Anspruch 11 sieht entsprechend der obigen Erläuterung zum Pflanztopf und zu der Tiefziehform vor, daß die erwärmte Kunststoffolie zunächst in eine Form gebracht wird, die im Bodenbereich zumindest am Rand nicht auf die endgültig angestrebte Topfform abzielt, sondern, was für das Tiefziehverfahren bei Kunststoffolien an sich nicht üblich ist, ganz andere, mit dem nachfolgenden Einstülpen des Bodens zu erreichende Kantenform der Randabschnitt vorbestimmt.

Ausführungsbeispiele für den Pflanztopf und für eine Formmulde werden nachfolgend zusammen mit dem Herstellungsverfahren näher beschrieben. In der Zeichnung zeigen:
- Fig. 1: einen Pflanztopf von unten,
- Fig. 2: Schnitt nach Linie II-II in Fig. 1,
- Fig. 3 und 4: schnittbildliche Ansicht des Bodenbereichs zu einem Pflanztopf gemäß Fig. 1 und 2 bei der Formgebung und
- Fig. 5 und 6: schnittbildliche Ansichten einer Tiefziehvorrichtung bei verschiedenen Arbeitsphasen.

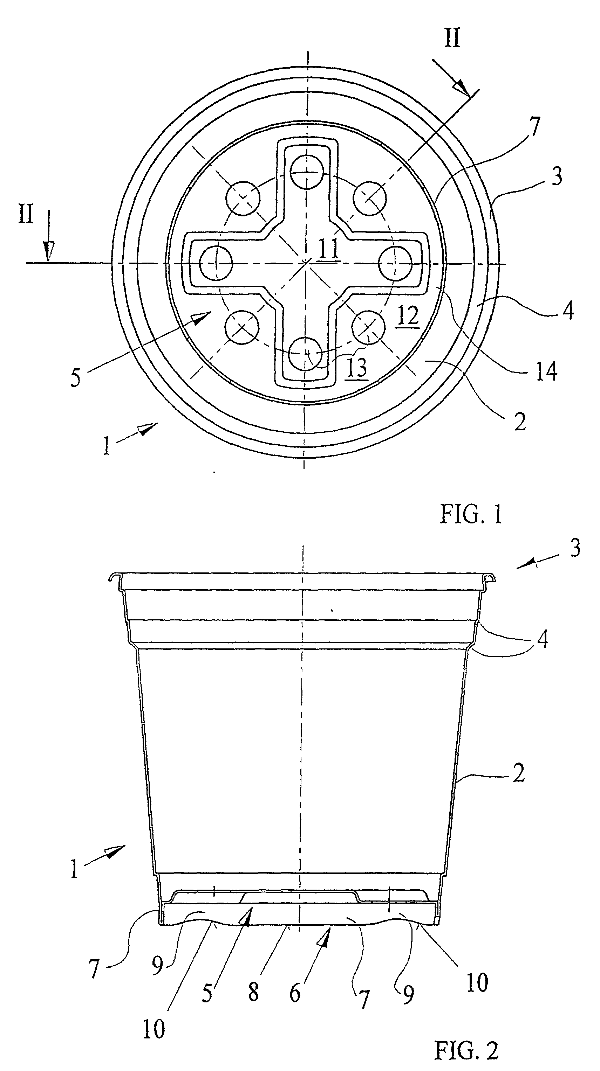

Der in Fig. 1 und 2 veranschaulichte Pflanztopf 1 hat eine stumpfkegelige Grundform mit einem Mantel 2, der sich nach oben hin zu einem Rand 3 hin aufweitet. Der Rand 3 ist ein bogenförmig nach unten rückgeformter Hohlrand, der zusammen mit umlaufenden Stufen 4 sowohl dem Aussehen wie auch der Querschnittsversteifung wie auch der guten Greifbarkeit dient.

Unterseitig weist der Topf einen Boden 5 auf, der über einen Rand 6 auf eine geeignete Fläche zu stellen ist.

Der Pflanztopf 1 ist aus einer Kunststoffolie tiefgezogen, bei der ein Rand 6 dieser Form nicht ohne weiteres - wie etwa bei einem Spritzgußteil vorgegeben werden kann. Er ist vielmehr in der Weise ausgebildet, daß die Folie hier doppellagig mit einer äußeren, den Mantel 2 fortsetzenden Lage und einer inneren Lage besteht, die in den Boden 5 übergeht.

Diese beiden Lagen des Randes 6 sind zweckmäßig fest aneinanderliegend geformt, so daß sich keine nennenswerten Zwischenräume (Ringspalte) ergeben, in denen sich Staunässe sammeln könnte oder in denen Erde oder Wurzelwerk sich verankern könnte, was beim Entleeren oder Umtopfen problematisch wäre.

Der Rand 6 besteht aus Randabschnitten 7, die mit einer Unterkante 8 eine Aufstellebene definieren und die voneinander durch Lücken 9 mit abgehobener Unterkante 10 begrenzt sind. Diese Lücken 9 unterbrechen eine sonst ringförmig geschlossene Aufstellinie, innerhalb der aus dem Topf ablaufendes Wasser gefangen würde, was die Feuchtigkeitsregulierung im Topf beeinträchtigen und eine Entwicklung von Staunässe fördern würde.

Wie aus Fig. 2 ersichtlich, ist der Boden 5 selbst profiliert ausgebildet, wobei ein aus Fig. 1 ersichtlicher angehobener Bereich 11 gegenüber einem umgebenden tieferliegenden Bereich 12 eine Kreuzform erhalten hat. Innerhalb der Kreuzform 11, insbesondere aber innerhalb der tieferliegenden Bereiche 12, sind Löcher zur Wasserabfuhr enthalten. Wird also ein bepflanzter Topf mit einem Schlauch oder einer Brause überschüssig gewässert, dann läuft das Wasser durch die Löcher 13 nach unten ab und verläßt den Bereich des Topfes durch die Lücken 10. Dabei sorgt der ausreichend hohe Abstand zwischen der Aufstellebene gemäß Unterkanten 8 und dem Boden 5 dafür, daß auch Tropfen oder verbleibende flachere Wasseransammlungen nicht nach oben in den Topf hineinwirken können.

Die Kreuzform 11 ist bei der Gestaltung des Bodens nicht bis zum Rand 7 geführt. Längs des Randes ergibt sich die tieferliegende Fläche 12 umlaufend. Dies dient zur Begrenzung der Stapelhöhe, da die Randabschnitte 7 schon eine Mindest-Stapelhöhe vorgeben, die auch für ein leichtes und sicheres Entstapeln ineinander gesteckter konischer Töpfe ausreicht und nicht noch durch zusätzliche Profilhöhen vergrößert zu werden braucht.

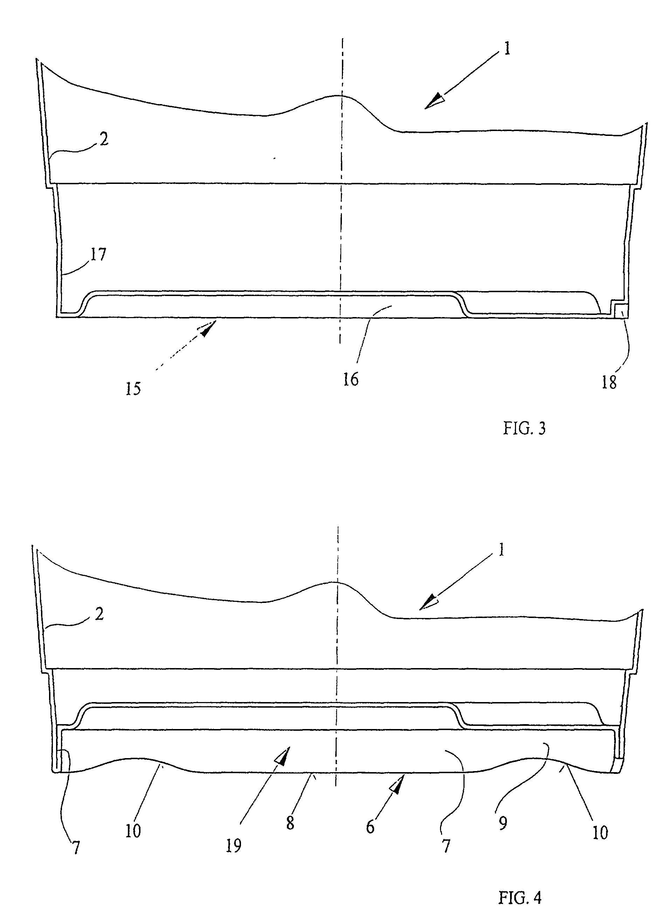

In den Fig. 3 und 4 ist die Formgebung des Topfes 1 im Bodenbereich anhand von Zwischenformen veranschaulicht. Dabei wird zunächst eine Zwischenform mit einem Boden 15 ausgebildet, die zwar in einem inneren Bereich bereits eine Profilierung 16 aufweist, die insbesondere die Kreuzform 11 des späteren Topfes bereits umfaßt, aber ansonsten nach oben hin offen ist, wie es der traditionellen Formgebung in Tiefziehverfahren entspricht. Der Boden 15 ragt dabei gegenüber dem Mantel 2 gemäß Fig. 2 deutlich weiter nach unten vor mit einem langen, unten sogar zylindrisch gebildeten Randbereich 17. Zwischen diesem Randbereich 17 und dem Boden 15 sind bereichsweise Einformungen 18 angebracht, die bei der weiteren Verformung die Lücken 9 und deren Unterkanten 10 gemäß Fig. 2 ergeben.

In weiterer Verformung des Bodens entsteht ein Boden 19 gemäß Fig. 4, der dem Boden 5 gemäß Fig. 2 entspricht, allerdings noch keine Löcher aufweist. Wenn der Boden 15 gemäß Fig. 3 insgesamt - einen schmalen Randbereich ausgenommen - hochgedrückt wird, entsteht eine Einstülpung zu dem doppellagigen Rand, der die anhand der Fig. 2 beschriebene Gestaltung aufweist. Dort, wo in Fig. 3 die Einformung 18 ausgebildet war, ist dieser Rand jeweils zu einer Lücke 9 nach oben hin abgesetzt und mit einer abgehobenen Unterkante 10 verkürzt. Der in Fig. 4 dargestellte Boden ist nachfolgend lediglich mit einer Lochstanzung zu versehen, um den Pflanztopf insofern fertigzustellen.

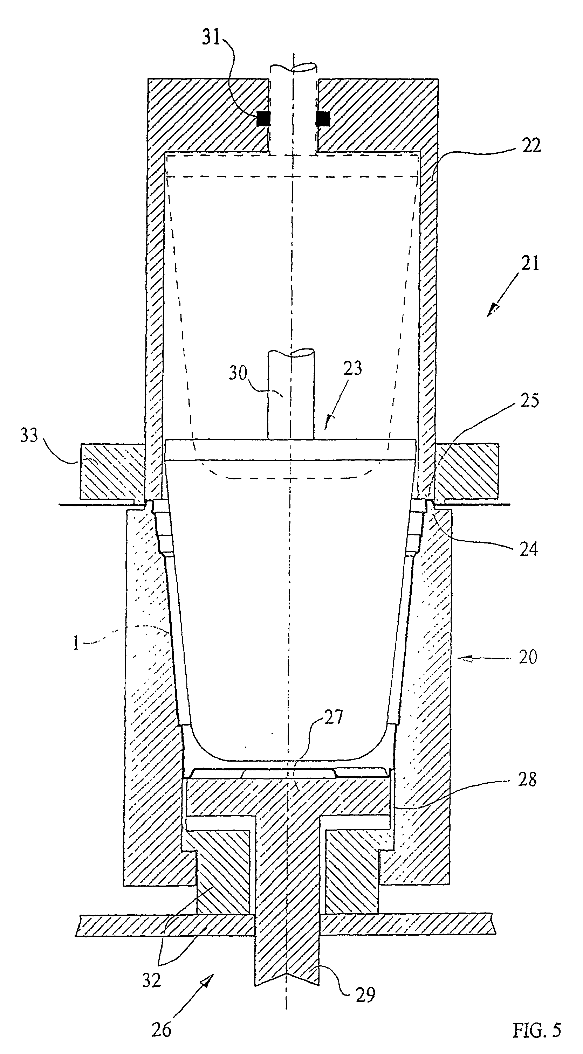

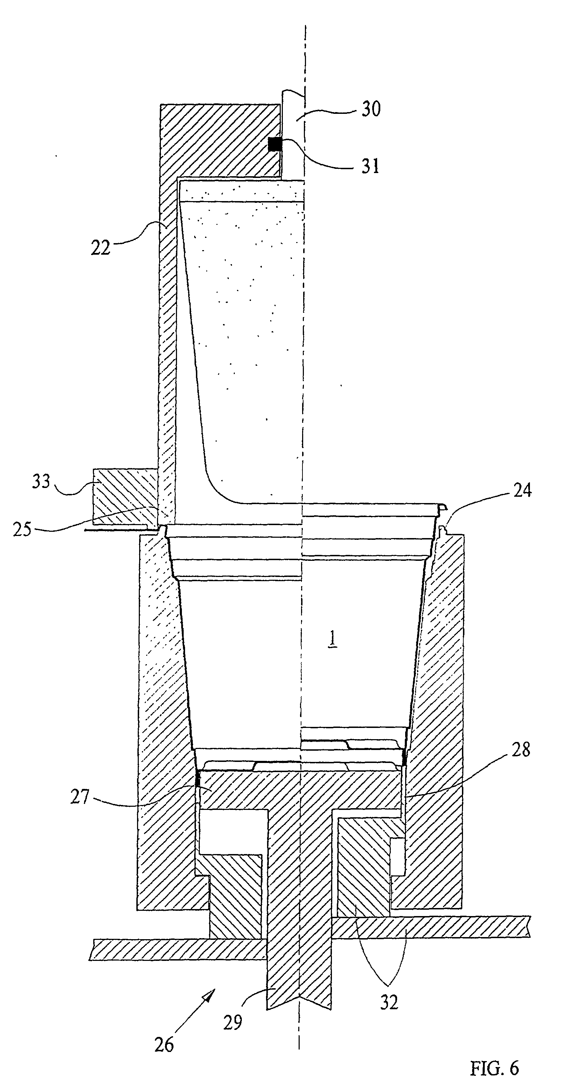

Eine Tiefziehform zur Herstellung eines Pflanztopfs nach Fig. 1 und 2 bzw. eines noch zu stanzenden Formrohlings mit einem Boden gemäß Fig. 3 und danach Fig. 4 ist in den Fig. 5 und 6 zu sehen. Eine zur (außenseitigen) Formung des Topfes gestaltete Negativform ist eine Mulde 20 in einer mit 21 bezeichneten Tiefziehform, die oberseitig durch einen glockenförmigen Deckel 22 druckfest abschließbar ist. Die Glockenform dient dazu, einen in die Mulde niederbeweglichen Vorform-Stempel 23 mit gerundeten Kanten in einer in gebrochenen Linien angedeuteten Rückzugslage aufzunehmen.

Wird nun eine auf Erweichungstemperatur vorerhitzte und mit Übermaß kreisförmig ausgestanzte Folie, etwa eine Polypropylenfolie von 140°C bis 150°C an einem oberen Rand 24 der Mulde 20 von dem Deckel 22 festgeklemmt und der Stempel 23 niedergefahren, dann ergibt sich aufgrund der Form des Stempels eine vorgegebene Streckung der Folie mit entsprechender Wanddickenverteilung zu einer zunächst noch vereinfachten kleineren Topfform.

Eine weitergehende und verfeinerte Verformung erfolgt mittels innenseitig in die Mulde eingegebener Druckluft von beispielsweise 5 oder 6 bar, gegebenenfalls auch unterstützt durch das Aufbringen von Vakuum innerhalb der Mulde, aber außerhalb der tiefgezogenen Folie, so daß die Mantelform bereits ihre endgültige Fassung gemäß Fig. 1 und 2, der Boden aber die Zwischenform gemäß Fig. 3 erhält. Bei dieser Formgebung dient eine umlaufende Unterkante 25 des Deckels 22 in Verbindung mit dem Rand 24 der Mulde 20 als Niederhalter, der beim Tiefziehen ein Nachrutschen von Folie verhindert und bei der nachfolgenden Weiterverformung den Formling fixiert. Im weiteren wird eine zweigeteilte Bodenform 26 wirksam, die aus einer Innenform 27 und einem Außenring 28 besteht, dessen radiale Breite etwa gleich oder geringfügig breiter als die doppellagige Ausbildung der gewünschten Randabschnitte 7 ist. Die Innenform 27 ist stempelartig an einem Kolben 29 axial in die Mulde 20 hinein hochfahrbar und stülpt dabei die erzielte Zwischenform des Topfes vom Boden her ein, so daß der in Fig. 4 dargestellte Boden 19 entsteht. Die sich ergebende Stellung und Form ist in Fig. 6 links von der eingezeichneten Mittelachse veranschaulicht, wobei der Deckel 22 mit seiner Niederhalter-Unterkante 25 noch als Arretierung und Widerlager dient. Dort ist aber auch bereits schon wieder der Stempel 22 in die Ausgangsstellung zurückgefahren, und zwar mit Hilfe einer axialen Kolbenstange 30, die mit einer Bewegungsdichtung 31 gegenüber dem Deckel 22 abgedichtet ist, um die erwähnte pneumatische Endverformung zu ermöglichen.

Rechts der Mittelachse ist in Fig. 6 ein weiterer Verfahrensschritt eingezeichnet, bei dem der Außenring 28 über eine Halterung 32 von unten angehoben wird und dabei als Auswerfer wirkt, nachdem oberseitig bereits der Deckel 22 fortbewegt wurde. Vor dem Auswerfen ist die überstehende Folie durch eine Schnittplatte 33, die den Deckel 22 umgibt, im Zusammenwirken mit dem zugleich als Schneidstempel mit scharfer Außenkante versehenen Auflagerand 24 abgetrennt worden. Bei diesem Stanzen wird die Mulde 20 mitsamt Deckel 22 angehoben, während die Schnittplatte 33 stehenbleibt. Der so geformte Pflanztopf kann dann maschinell gegriffen und entnommen und einer Lochstanze zugeführt werden, während die Mulde 22 erneut von einer vorerwärmten Folie abgedeckt wird.

Dieser Tiefziehvorgang vollzieht sich unbeschadet der verschiedenen Verformungsschritte mit einer sehr hohen Taktfrequenz, wobei in an sich bekannter Weise die Formmulde 20 gekühlt wird, um die von der Folie abgegebene Wärme abzuführen und das tiefgezogene Produkt möglichst schon unterhalb der Erweichungstempertur dem Stanzvorgang zuzuführen. Das dabei erzielte Ergebnis zeigt allerdings, daß auch bei Pflanztöpfen, die aus einer Folie tiefgezogen sind, komplexe, stegartige Gestaltungen mit modulierten Randkonturen erzielt werden können, die traditionell nur anderen Formgebungsverfahren, nämlich dem Spritzguß, zugewiesen werden.

## Patentansprüche

1. Pflanztopf (1) aus tiefgezogener Kunststoffolie mit einem über zumindest einen Fuß (7) gegenüber einer Aufstellfläche mit Abstand aufgestellten, Löcher (13) aufweisenden Boden (5), wobei der oder jeder Fuß (7) aus zumindest einem am Rand nach unten ragenden Randabschnitt zwischen dem Boden (5) und einem Mantel (2) besteht, der durch zumindest eine Lücke (9) mit von der Aufstellfläche abgehobener Unterkante (10) begrenzt ist, **dadurch gekennzeichnet, daß** der Randabschnitt (7) aus zwei Lagen der Kunststoffolie besteht, die im Bereich der Füße oberhalb eines sie verbindenden Falzes (8) direkt aneinanderliegen.

2. Pflanztopf nach Anspruch 1, **dadurch gekennzeichnet, daß** der Boden (5) profiliert ausgebildet ist und Löcher (13) zumindest in tiefliegenden Profilbereichen (12) aufweist.

3. Pflanztopf nach Anspruch 2, **dadurch gekennzeichnet, daß** der Boden (5) im Bereich des Randes als Aufstellfläche beim Ineinanderstapeln eben ausgebildet ist.

4. Pflanztopf nach Anspruch 3, **dadurch gekennzeichnet, daß** der Boden in einer Kreuzform (11) profiliert ist, wobei die Kreuzbalken gegenüber dem übrigen Boden höhergelegt sind und mit einem Randabstand enden.

5. Tiefziehform (21) für Pflanztöpfe nach einem der Ansprüche 1 bis 4 mit einer Formmulde (20), gebildet mit einer Mantelform und einer relativ zur Mantelform zumindest bereichsweise beweglich ausgebildeten Bodenform (26), **dadurch gekennzeichnet, daß** die Bodenform (26) mit einem nur etwa eine doppelte Wandstärke des Pflanztopfs breiten Außenring (28) und einem vom Außenring getrennt beweglichen Innenteil (27) gebildet ist, wobei der Außenring (28) eine profilierte Oberkante mit zumindest einem nach oben vorstehenden Kantenbereich aufweist.

6. Tiefziehform nach Anspruch 5, **dadurch gekennzeichnet, daß** der Außenring (28) als Auswerfer in die Formmulde hineinbeweglich ist.

7. Tiefziehform nach Anspruch 5 oder 6, **dadurch gekennzeichnet, daß** der Formmulde (20) eingangsseitig ein Niederhalter (25) zugeordnet ist.

8. Tiefziehform nach Anspruch 5, 6 oder 7, **dadurch gekennzeichnet, daß** der Formmulde (20) eingangsseitig ein druckfest abschließender Deckel (22) zugeordnet ist.

9. Verfahren zum Tiefziehen von Pflanztöpfen nach einem der Ansprüche 1 bis 4 aus einer Kunststoffolie, die auf Erweichungstemperatur erwärmt, über einer Formmulde (20) mit einer Mantelform und einer Bodenform (26) festgelegt, durch mechanische und/oder pneumatische Formgebung in die Formmulde (20) eingeformt und aus der Formmulde (20) ausgeworfen wird, **dadurch gekennzeichnet, daß** die in die Formmulde eingeformte Folie am Boden zumindest in dessen Randbereich mit zumindest einer Höhenanhebung randseitig uneben vorgeformt wird und danach mittels eines beweglichen inneren, einen schmalen Rand am Boden freilassenden Boden-Innenteils (27) zur Ausbildung zumindest eines doppelagigen randseitigen Fußes (7) mit zumindest einer Lücke für einen Ablauf von Wasser mit direkt aneinanderliegenden Lagen der Folie eingestülpt wird.

## Claims

1. Plant pot (1) made of deep-drawn plastic sheet with a base (5) set at a clearance from a supporting surface by means of at least one foot (7) and having holes (13), whereby the foot (or feet) (7) consists of at least one rim section projecting downwards, at the rim, between the base (5) and a casing (2), which is bounded by at least one gap (9) with a lower edge (10) raised from the supporting surface, **characterised in that** the rim section (7) consists of two layers of plastic sheet that in the area of the feet lie directly against each other above a fold (8) connecting them together.

2. Plant pot in accordance with claim 1, **characterised in that** the base (5) is profiled and has holes (13) at least in the low areas of the profile (12).

3. Plant pot in accordance with claim 2, **characterised in that** the base (5) is flat in the area of the rim to provide a supporting surface when stacked inside each other.

4. Plant pot in accordance with claim 3, **characterised in that** the base is a profile designed as a cross (11), with the bars of the cross being higher than the rest of the base and terminating with a rim clearance.

5. Deep-drawn shape (21) for plant pots in accordance with one of claims 1 to 4 with a mould trough (20), formed with a casing mould and a base mould (26) designed so as to be able to move at least in areas relative to the casing mould, **characterised in that** the base mould (26) has a wide outer ring (28) only about twice the thickness of the wall of the plant pot and an inner part (27) that can move separately from the outer ring, whereby the outer ring (28) has a profiled top edge with at least one edge area projecting upwards.

6. Deep-drawing mould in accordance with claim 5, **characterised in that** the outer ring (28) can be moved into the mould trough as an ejector.

7. Deep-drawing moulding in accordance with claims 5 or 6, **characterised in that** a holddown (25) is assigned to the mould trough (20) at one end.

8. Deep-drawing mould in accordance with claims 5, 6 or 7, **characterised in that** a pressure-proof sealing cover (22) is assigned to the mould trough (20) at the inlet end.

9. Method for deep-drawing plant pots in accordance with one of claims 1 to 4, from a plastic sheet that heated to softening temperature is placed over a mould trough (20) with a casing mould and base mould (26), formed in the mould trough (20) by mechanical and/or pneumatic moulding and ejected from the mould trough (20), **characterised in that** the sheet moulded into the mould trough is on the base, at least in its rim area, unevenly preformed at the rim end with at least one increase in height and is then, by means of a moveable inner base inner part (27) that leaves a narrow rim free on the base, reverse drawn, with layers of the sheet lying against each other, to form at least one double-layered foot (7) on the rim with at least one gap for water drainage.

## Revendications

1. Pot à plante (1) constitué à partir d'un film de matériau synthétique embouti avec un fond (5) s'appuyant sur au moins un pied (7) à distance d'une surface d'application et présentant des trous (13), le ou chaque pied (7) étant constitué d'au moins une section de bord faisant saillie vers le bas sur le bord entre le fond (5) et une enveloppe (2) qui est délimitée par au moins un interstice (9) avec le bord inférieur (10) qui est relevé par rapport à la surface d'application, **caractérisé en ce que** la section de bord (7) est constituée de deux couches de film de matériau synthétique, qui se situent directement l'une à côté de l'autre dans la zone des pieds au-dessus d'un pli (8) qui les relie.

2. Pot à plante selon la revendication 1, **caractérisé en ce que** le fond (5) est profilé et présente des trous (13) au moins dans les zones embouties (12) du profil.

3. Pot à plante selon la revendication 2, **caractérisé en ce que** le fond (5) est uni dans la zone du bord pour servir de surface d'application lors d'un empilage mutuel.

4. Pot à plante selon la revendication 3, **caractérisé en ce que** le fond est profilé en forme de croix (11), les traverses de la croix étant surélevées par rapport au reste du fond et se terminant à distance du bord.

5. Outil d'emboutissage (21) pour pots à plante selon l'une quelconque des revendications 1 à 4, avec une cavité de moulage (20) formée d'un moule d'enveloppe et d'un moule de fond (26) conformé de manière à pouvoir se déplacer par rapport au moule d'enveloppe au moins par zones, **caractérisé en ce que** le moule de fond (26) est formé d'un anneau externe (28) d'une largeur de seulement le double de l'épaisseur de paroi et d'une partie interne (27) qui peut se déplacer séparément de l'anneau externe (28), l'anneau externe (28) présentant une arête supérieure profilée avec au moins une zone d'arête faisant saillie vers le haut.

6. Outil d'emboutissage selon la revendication 5, **caractérisé en ce que** l'anneau externe (28) peut être déplacé intérieurement comme éjecteur dans la cavité de moulage.

7. Outil d'emboutissage selon la revendication 5 ou 6, **caractérisé en ce qu'**un serre-flan (25) est affecté à la cavité de moulage (20) du côté de l'entrée.

8. Outil d'emboutissage selon la revendication 5, 6 ou 7, **caractérisé en ce qu'**un couvercle (22) fermant de manière à résister à la pression est affecté à la cavité de moulage (20) du côté de l'entrée.

9. Procédé d'emboutissage de pots à plante selon l'une quelconque des revendications 1 à 4 à partir d'un film de matériau synthétique, qui est chauffé à sa température de ramollissement, fixé sur une cavité de moulage (20) ayant un moule d'enveloppe et un moule de fond (26), moulé dans la cavité de moulage (20) par façonnage mécanique et/ou pneumatique et éjecté de la cavité de moulage (20), **caractérisé en ce que** le film moulé dans la cavité de moulage est prémoulé inégalement sur le fond au moins dans sa zone de bord avec au moins une surélévation côté bord et est ensuite embouti par retournement au moyen d'une partie de fond interne mobile (27) libérant un bord étroit sur le fond pour former au moins un pied côté bord à double couche (7) avec au moins un interstice pour une évacuation d'eau avec des couches du film situées directement l'une à côté de l'autre.
